# EUROPEAN PATENT APPLICATION

(11) **EP 2 527 218 A1**
(43) Date of publication of application: **28.11.2012**
(21) Application number: 10845348.1
(22) Date of filing: 17.08.2010
(51) Int. Cl.: B60V 3/08, B64B 1/20

(54) **AIRCRAFT ON AN AIR CUSHION WITH AEROSTATIC LOAD RELIEF**

(30) Priority: 08.02.2010 RU 2010104373
(71) Applicant: Filimonov, Alexandr Iosifovich, Tyumen 625048 (RU); Shlyakhov, Alexandr Sergeevich, Tyumen 625038 (RU)
(72) Inventor: Filimonov, Alexandr Iosifovich, Tyumen 625048 (RU); Shlyakhov, Alexandr Sergeevich, Tyumen 625038 (RU)
(74) Representative: Bucher, Ralf Christian
(86) International application number: PCT/RU2010/000451
(87) International publication number: WO 2011/096844

(57) **Abstract**

The present invention pertains to the field of aviation and relates to aircraft using a mixed flight principle for transporting super-heavy and oversized loads. The aircraft includes a disc-shaped body in which an aerostatic lift system and a central tunnel are arranged, a pilot-passenger cabin, propulsion units with propellers, and members for landing on an air cushion in the form of an inflatable toroidal balloon with a flexible guard on the front and side portions thereof. A streamlined body provided inside the tunnel comprises a lift propeller on the upper portion thereof and is secured to the tunnel walls by radial partitions. The aircraft includes on each side two or more side wing brackets and a rear tail unit with control and stabilization members in the form of air rudders and jet rudders and elevons for the horizontal tail unit. The fins of the tail unit are arranged on the rear portion of the body on tail beams, and rotating shutters are provided at the inlet of the tunnel. A number of longitudinal aerodynamic fences are provided on the topside of the front portion of the body on either side of the tunnel. The present invention enhances the exploitation take-off and landing characteristics of the aircraft.

## Description

### FIELD OF THE INVENTION

The invention relates to aerial vehicles operating on a mixed flight principle that can be used for lifting and transporting very heavy and large-sized cargo by air or overland.

### BACKGROUND OF THE INVENTION

The aerostatic lift air cushion aircraft, A.I. Filimonov's hybrid airship, disclosed in Russian Patent RU No. 2,059,530 published on May 10, 1996, comprises a disk-shaped body having an aerostatic lift system and a central tunnel containing a streamlined member provided in the top part thereof and secured to the tunnel walls by aerodynamic radial webs, all arranged within the disk-shaped body; lateral wing panels and a tail assembly provided with a horizontal tail plane and two or more keels at the aft of the body; power plants having propulsion airscrews; air cushion landing gear such as an inflatable torus balloon (landing torus) and wheel/ski supports provided on the undersurfaces of the body; a pilot-passenger cabin; pivoted flaps provided at the inlet of the central tunnel; control and stabilization elements in the form of air rudders provided at the outlet of the tunnel, and in the form of jet rudders provided on the horizontal tail plane and wing panels; and jet flaps provided at the trailing edges of the wing panels and the body.

The prior art hybrid airship is deficient because of its poor stability and handling capacity at takeoff and landing on water surface and weak surfaces such as snow cover, bogged soil, and so on.

These deficiencies were corrected in A.I. Filimonov's hybrid airship disclosed in Russian Patent RU No. 2,092,381 published on October 10, 1997. The airship/aircraft comprises a disk-shaped body having an aerostatic lift system and a central tunnel provided inside, said central tunnel containing a streamlined member provided with a lift airscrew in the top part thereof and secured to the tunnel walls by radial aerodynamic webs; lateral wing panels; a tail assembly having a horizontal tail plane and two or more keels at the aft of the body; power plants having propulsion airscrews; air cushion landing gear in the form of an inflatable torus balloon, or landing torus, having a flexible barrier at the front and side parts thereof, in the form of wheel/ski supports mounted on the undersurfaces of the body and the pilot-passenger cabin, and in the form of gliding surfaces underneath the pilot-passenger cabin and a hydrofoil at the aft of the body; pivoted flaps provided at the inlet of the central tunnel; control and stabilization elements in the form of air rudders at the outlet of the tunnel and in the form of jet rudders provided on the horizontal tail plane and wing panels, and also in the form of elevons provided on the horizontal tail plane; and jet flaps provided on the trailing edges of the wing panels and the body.

The principal disadvantage of the prior art aerial vehicle is its lateral instability (list) in crosswind or on maneuver (turning) in intermediate (takeoff and landing) modes, with its performance deteriorating as a result.

### SUMMARY OF THE INVENTION

It is an aim of this invention to develop an aerial vehicle, in particular, an aerostatic lift air cushion aircraft, hereinafter referred to as the "aircraft," showing improved performance, including cargo handling, and having a lower weight and smaller size.

The technical result achieved by fulfilling the aim of the invention is improved flight reliability and safety, particularly upon failure of one of the cruising engines, and increased lift, making flight stable and controllable in all modes, particularly at takeoff and landing.

The above technical result is attained in an aircraft comprising a disk-shaped body having an aerostatic lift system and a central tunnel inside, said tunnel containing a streamlined member provided with a lift airscrew at the top part thereof and secured to the tunnel walls by radial aerodynamic webs; a pilot-passenger cabin; power plants provided with propulsion airscrews; air cushion landing gear in the form of an inflatable balloon having a flexible barrier at the front and side parts thereof, in the form of wheel/ski supports mounted on the undersides of the body and pilot-passenger cabin, and in the form of a gliding surface underneath the pilot-passenger cabin, and a hydrofoil at the aft of the body; pivoted flaps at the inlet of the tunnel; control and stabilization elements in the form of air rudders at the outlet of the tunnel and in the form of jet rudders provided on the horizontal tail plane and wing panels, and also in the form of elevons provided on the horizontal tail plane; wing panels; a tail assembly having a stabilizer and two or more keels provided at the aft of the body on tail beams; and jet flaps on the trailing parts of the wing panels and body, said aircraft being provided with two or more aerodynamic fences in the forward part of the disk-shaped body on two sides of the tunnel; two or more lateral wing panels having an aerostatic lift system provided therein; a tail assembly having a stabilizer and keels with an aerostatic lift system provided therein; a pilot-passenger-cargo cabin having a nose part turned up or aside; a central cargo bay having a detachable bottom or a cargo platform provided with telescoping lifters in the streamlined body; aft cargo bays having ramps turning out down in the tail beams; wheel/ski supports serving also as ladders for access to the cabin and body; power plants having separate drives for the lift airscrew and two or more cruising airscrews (each driven by its engine), or a single power plant, with the lift airscrew being driven by gas exhausted by engines (gas generators) of the cruising propulsion screw units mounted on pylons at the aft of the body in the plane of the tail beams and stabilizers.

This design helps correct the lateral instability and some loss of control in takeoff and landing modes when the lift airscrew operates in crosswind and maneuvers because the aerodynamic fences provided on top and in front of the disk-shaped body prevent the airflow from entering the tunnel from aside and, therefore, prevent displacement of the center of the resultant aerodynamic lift force to the side and, as a result, development of the rolling moment that causes lateral instability and some loss of control.

Using four or more wing panels, for example, instead of two panels helps reduce the wing span, that is, reduce the crosswise size.

The additional aerostatic systems in the wing panels and tail assembly increase the total lift force, raise the useful-to-takeoff load ratio, and improve safety and flight performance characteristics.

Cargo placed in the cabin, the streamlined body, and tail beams helps improve the longitudinal mass balance and performance characteristics.

The wheel/ski supports used as ladders help improve cargo handling operations off airfields.

Power plants having separate drives for the lift and cruising airscrews, or a single power plant using gas to drive the lift airscrew help reduce significantly the weight of the power plants and make them more reliable as they dispense with a complicated transmission train consisting of reducing gears, shafts, couplings, and the like that are typical of power plants having mechanical drives for the lift and cruising airscrews.

The cruising propulsion screw units located at the aft of the body, on pylons in the plane of the tail beams supporting the keels, and in the stabilizer plane direct all the airflow produced by the airscrews at the tail assembly, making the aerial vehicle controllable and stable at low takeoff and landing speeds and upon failure of one or more of the cruising propulsion screw units.

### BRIEF DESCRIPTION OF THE DRAWINGS

The invention is further described with reference to the drawings wherein:

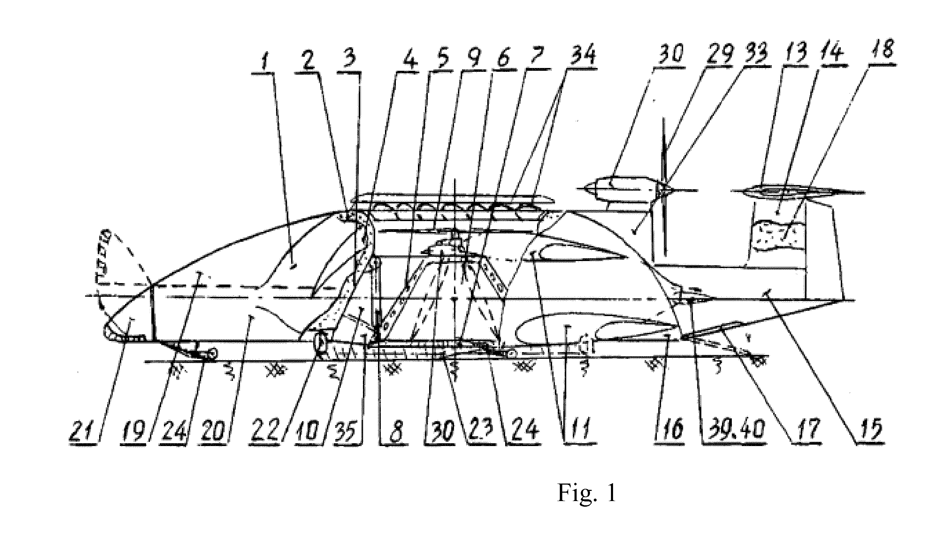

FIG. 1 is a side view of the aircraft;

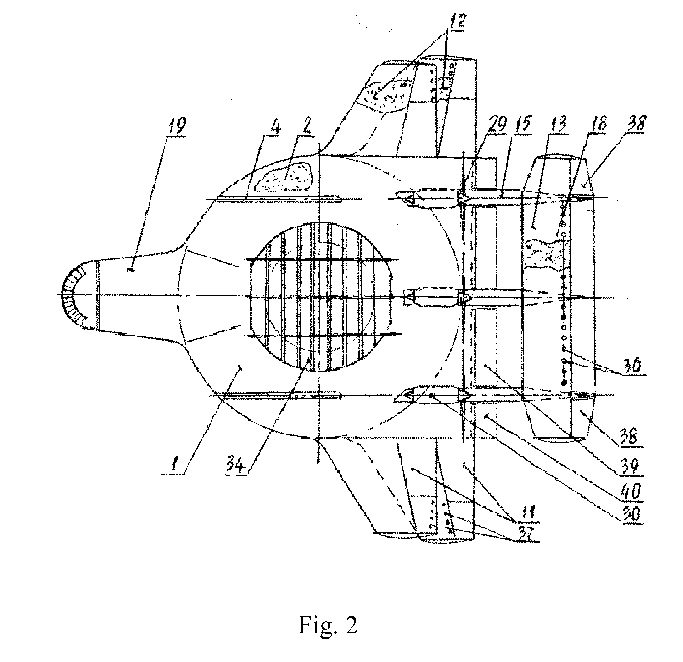

FIG. 2 is a top view of the aircraft;

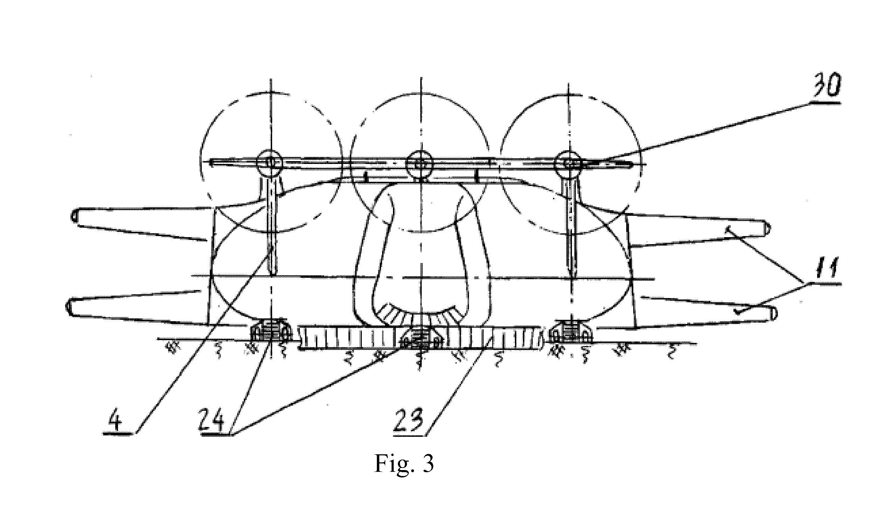

FIG. 3 is a front view of the aircraft;

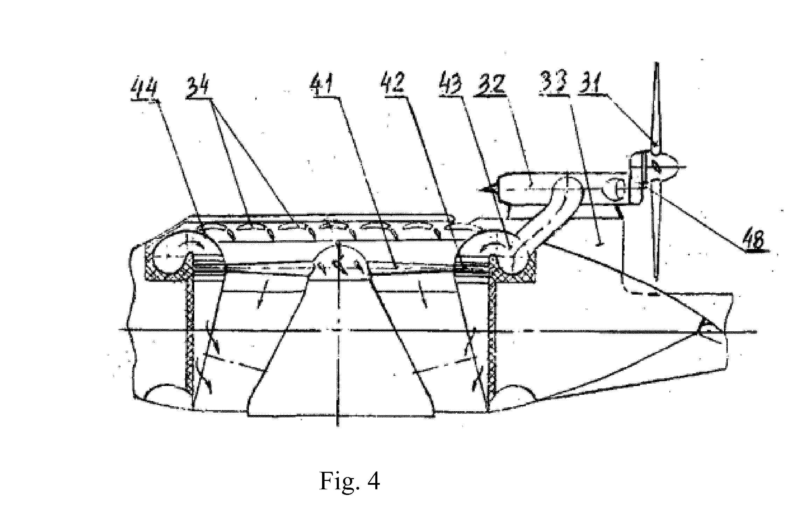

FIG. 4 is a side view of a single power plant using gas to drive the lift airscrew;

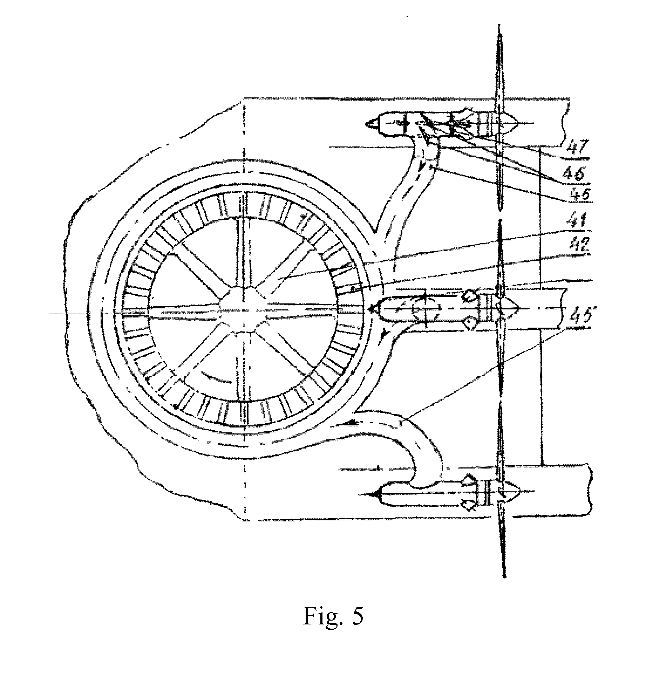

FIG. 5 is a top view of the single power plant;

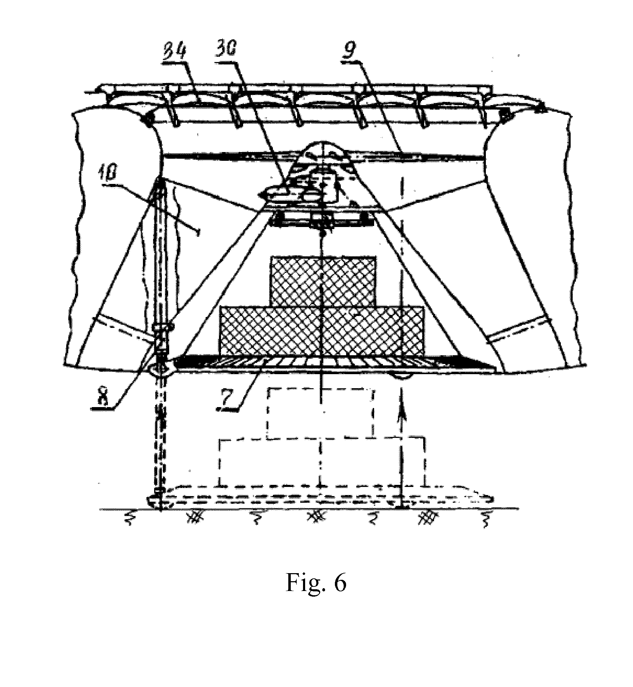

FIG. 6 is a view of the central cargo bay having a detachable extending platform;

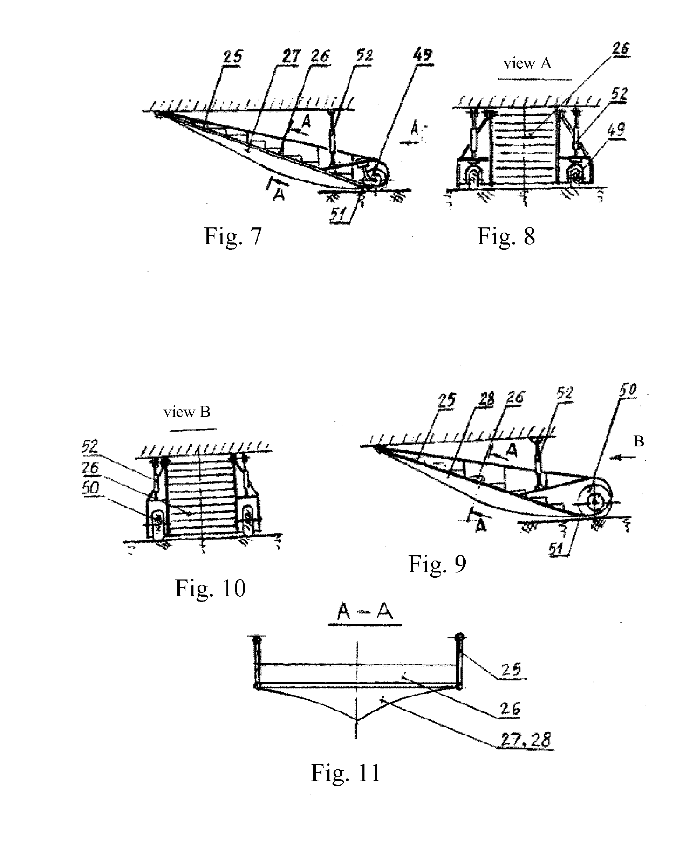

FIG. 7 is a side view of the forward wheel/ski support;
FIG. 8 is a view A of the forward wheel/ski support;
FIG. 9 is a side view of the aft wheel/ski support;
FIG. 10 is a view B of the aft wheel/ski support; and
FIG. 11 is a sectional view along A-A of the forward and aft wheel/ski supports.

The aircraft comprises a body 1 having an aerostatic lift system 2 and a central tunnel 3, with two or more aerodynamic fences 4 provided at the sides thereon on the outside of the body, in front and on both sides thereof, a streamlined member 5 being located inside tunnel 3 and having a cargo bay 6 therein, said cargo bay having a detachable bottom, or cargo platform 7, provided with telescoping lifters 8, and a lift airscrew 9 being provided in the top part of the member that is secured to the tunnel walls by radial aerodynamic webs 10; two or more wing panels 11 with an additional aerostatic lift system 11 arranged inside thereof; a tail assembly having a stabilizer 13 and keels 14 mounted on two or more tail beams 15 having cargo bays 16 inside with ramps 17 turning out down, and an aerostatic lift system 18 arranged inside the stabilizer and the keels; a pilot-passenger cabin 19 having a cargo bay 20 provided therein and a nose part 21 turning up or aside for cargo handling operations to be carried out; landing gear, including air cushion takeoff and landing gear in the form of an inflatable torus balloon 22 having a flexible barrier 23 on the forward and side parts thereof and in the form of wheel/ski supports 24 provided on top thereof with pivots 25 for ladders 26 to be arranged thereon to provide access to pilot-passenger cabin 19 and body 1, with gliding surfaces 27 and 28 provided underneath; power plants having separate drives for lift airscrew 9 and two or more cruising airscrews 29 from each engine 30, or a single power plant to drive the lift airscrew by gas exhausted by the engines (gas generators) of cruising propulsion screw units consisting of cruising airscrews 31 and engines 32 mounted on pylons at the aft of body 1 in the plane of tail beams 15; pivoted flaps 34 at the inlet of the tunnel; control and stabilization elements in the form of air rudders 35 at the outlet of the tunnel, in the form of jet rudders 36 and 37 mounted on horizontal tail plane 13 and wing panels 11, and also in the form of elevons 38 mounted on horizontal tail plane 13; and jet flaps 39 and 40 provided at the aft parts of body 1.

It is reasonable to use a single power plant driving the lift airscrew by gas for vertical takeoff. The single gas-drive power plant comprises two or more engines or gas generators 32 and cruising propulsion type airscrews 31; lift airscrew 41 connected at the blade ends thereof to a drive turbine 42; a gas manifold 43 combined with an inlet manifold 44 of the tunnel; gas ducts 45 connected to the gas generator containing pivoted flaps 46 provided ahead of a free power turbine 47 that is connected to a reducing gear 48 serving to drive cruising airscrew 31.

Wheel/ski supports 24 fulfill many functions and comprise controlled steerable wheels 49 on forward wheel/ski support 24 and braking wheels 50 on aft wheel/ski supports, and skis 51 that are combined with gliding surfaces 27 and 28. Pivots 25 of forward wheel/ski support 24 have their forward ends hinged to the undersurfaces of cabin 19 and body 1 and rest on cylindrical shock absorbers 52 secured to cabin 19 and body 1.

### THE PREFERRED EMBODIMENT OF THE INVENTION

The aircraft can take off (and land) on an air cushion after a run or vertically.

Before takeoff (or landing), cargo is loaded into cargo bay 6 of streamlined member 5 or simultaneously (to achieve mass balance) into cargo bay 20 of pilot-passenger cabin 19 and cargo bays 16 of tail beams 15.

Cargo is loaded into bay 6 (central cargo bay) as follows: telescoping lifters 8 are used to lower cargo platform 7 (bottom of member 5) until it touches the surface, whereupon the aircraft resting against platform 7 is returned, together with the cargo, by lifters 8 back to the bottom of cargo bay 6 (and the member). The cargo is unloaded in the reverse order.

Cargo is loaded into bay 20 of pilot-passenger cabin 19 and cargo bays 16 of tail beams 15 as follows: nose part 21 of pilot-passenger cabin 19 is turned up or aside and, simultaneously, ramps 17 of tail beams 15 are turned out down. Next, cargo bay 20 of cabin 19 and cargo bays 16 of tail beams 15 are loaded up in succession or simultaneously. After they have been loaded up, nose part 21 of the cabin and ramps 17 of beams 15 return to their original (closed) position. The cargo is unloaded in the reverse order.

The aircraft takes off on an air cushion after a run as follows: a compressor (not shown) inflates torus balloon 22 and flexible barrier 23 is extended simultaneously. The lift propulsion screw unit is started up and run until it achieves the required power such that lift airscrew 9 forces the airflow into the air cushion interior circumscribed by torus balloon 22 and flexible barrier 23. The air cushion generates a lift force in addition to the jet lift force produced by airscrew 9. Aerostatic lift systems 2, 12 and 18 located in disk-shaped body 1, wing panels 11, stabilizer 13, and keels 14 produce an aerostatic lift force as well. In this situation, pivoted flaps 34 are opened. Wheel/ski supports 24 resting on the surface give the aerial vehicle the necessary cohesion with the surface. The cruising propulsion screw units are started up next. As the cruising propulsion screw units develop the required power, the aerial vehicle runs on the air cushion and wheel/ski supports 24 that continue to provide cohesion and keep the aircraft on course. The airflow ejected backward from the air cushion interior and the airflow from cruising airscrews over keels 14 contribute further to steady movement on course during the run and climb.

Aerodynamic fences 4 restrict movement of the airflow into tunnel 3 on maneuver or in crosswind and, in this way, prevent lateral instability, or list, at takeoff and landing.

Elevons 38 mounted on stabilizer 13 contribute, together with the ailerons, to additional lateral balance at takeoff and landing at low flight speeds as airflow is directed at elevons 38 from cruising aircrews 29.

Jet flaps 39 compensate, together with the elevators, for the considerable pitching of the body caused by lift airscrew 9 rotating in tunnel 3 and, therefore, maintain the necessary longitudinal balance.

After the climb and changeover to horizontal flight, lift airscrew 9 is stopped, flaps 34 close tunnel 3, torus balloon 22 and flexible barrier 23 are retracted, and the required aerodynamic lift is produced by body 1 and wing panels 11. Aerostatic lift force, though, is kept up.

On descent and landing, the above steps are reversed - balloon 22 and flexible barrier 23 are extended, lift airscrew 9 is restarted, and pivoted flaps 34 of tunnel 3 are opened simultaneously. The aircraft lands on the wheel/ski supports and air cushion.

When the aircraft takes off from, and lands on, water, gliding surfaces 27 and 28 provided on wheel/ski supports 24 are activated, and so are skis 51 when the aircraft lands on snow or soft ground. Cylindrical shock absorbers 52 ease the load on wheel/ski supports 24 and transmit it (in need) to inflated torus balloon 22 already extended.

The aircraft has a single power plant to drive lift airscrew 41 by gas exhausted from engines, or gas generators, 32 of the cruising propulsion screw units that develop enough power for vertical takeoff and landing.

In this situation, the aircraft takes off vertically as follows:

Engines, or gas generators, 32 of the cruising propulsion screw units are started up, their flaps 46 turning to a position in which gas streams are directed into gas manifold 43 through gas ducts 45. Gas flows to drive turbine 42 that is secured to the blade ends of lift airscrew 41. Pivoted flaps 34 open simultaneously to admit air to the lift airscrew therethrough. As revolutions (and power) of drive turbine 42 (and airscrew 41) increase so does the lift force, mostly the jet lift force produced by airscrew 41. When the jet lift force and aerostatic lift force add up to a total magnitude equal to, or greater than, the weight of the aerial vehicle, the aircraft takes off vertically to a desired altitude at which the vertical climb changes over to horizontal flight. For this to happen, flaps 46 of gas generators 32 turn to direct some of the gas to free power turbine 47 that sets cruising airscrew 31, through reducing gear 48, in rotation to produce horizontal thrust and cause the aerial vehicle to fly horizontally. As the horizontal flight speed grows the aerodynamic force on wing panels 11 and body 1 increases and the jet lift force of airscrew 41 decreases. When the aerodynamic lift force and the aerostatic lift force are together equal to the weight of the aerial vehicle, the drive of lift airscrew 41 is turned off by flaps 46 turning to drive free power turbine 47 that turns cruising airscrew 31 (through reducing great 48) at full speed. Meanwhile, pivoted flaps 34 close off the tunnel completely.

The vertical flight mode can be changed over to horizontal flight after, or without, a climb.

The aircraft is stabilized and controlled during vertical takeoff (landing), hovering, and at low intermediate flight speeds by control and stabilization elements 35 provided at the outlet of tunnel 3 and jet rudders 36 and 37 provided on stabilizer 13 and wing panels 11.

The aerostatic lift air cushion aircraft flies horizontally at a desired altitude similarly to a conventional aircraft relying on the aerodynamic control elements provided on the wing panels and tail assembly.

The claimed aircraft is stable and controllable in flight and at takeoff and landing, and also on firm ground, weak soils, and water as a result of its lateral stability being increased by aerodynamic fences and longitudinal balance being achieved by cargo bays provided in the pilot-passenger cabin, streamlined member, and tail beams, and by aerostatic lift systems being provided in the tail assembly and wing panels. The aircraft is also highly efficient owing to the lower weight of its power plants and smaller size. The aircraft can be operated off airfields. These advantages and an experimental model built lead to the conclusion that this aerial vehicle complies with the "industrial applicability" requirement.

## Claims

1. An aerostatic lift air cushion aircraft comprising a disk-shaped body containing an aerostatic lift system and a central tunnel enclosing a streamlined member provided with a lift airscrew in the top part thereof and secured to the tunnel walls by radial aerodynamic webs; a pilot-passenger cabin; power plants provided with propulsion airscrews; air cushion landing gear in the form of an inflatable torus balloon having a flexible barrier on the forward and side parts thereof; wheel/ski supports provided on the undersurfaces of the body and pilot-passenger cabin; a gliding surface underneath the pilot-passenger cabin and a hydrofoil at the aft of the body; pivoted flaps at the inlet of the tunnel; control and stabilization elements in the form of air rudders at the outlet of the tunnel, in the form of jet rudders provided on the horizontal tail plane and wing panels, and in the form of elevons provided on the horizontal tail plane; wing panels; a tail assembly having a stabilizer and two or more keels provided at the aft of the body on the tail beams; jet flaps provided on the trailing parts of the wing panels and body, wherein two or more longitudinal aerodynamic fences are provided on the forward part of the disk-shaped body upwardly on two sides of the tunnel, and two or more wing panels are provided at the sides of the body.

2. An aircraft as claimed in claim 1, wherein additional aerostatic lift systems are provided in the wing panels, the stabilizer, and the keels of the tail assembly.

3. An aircraft as claimed in claim 1, wherein cargo bays are provided in the pilot-passenger cabin, the streamlined member, and the tail beams.

4. An aircraft as claimed in claim 3, wherein the cargo bay of the streamlined member has a detachable bottom, or cargo platform, provided with telescoping lifters.

5. An aircraft as claimed in claim 3, wherein the cargo bays of the tail beams have ramps turning out down.

6. An aircraft as claimed in claim 1, wherein the pilot-passenger cabin has a nose part turning up or aside.

7. An aircraft as claimed in claim 1, wherein the wheel/ski supports also serve as ladders for access to the cabin and body.

8. An aircraft as claimed in claim 1, wherein the wheel/ski supports have gliding surfaces underneath.

9. An aircraft as claimed in claim 1, wherein the power plants have separate drives for the lift airscrew and two or more cruising airscrews from each engine, or a single power plant to drive the lift airscrew by gas from the engines, or gas generators, of the cruising propulsion screw units mounted on pylons at the aft of the body in the plane of the tail beams.
